**Europäisches Patentamt**

(19) **European Patent Office**

**Office européen des brevets**

(11) Numéro de publication: **0 083 283**
**B1**

(12) **FASCICULE DE BREVET EUROPEEN**

(45) Date de publication du fascicule du brevet:
**14.05.86**

(51) Int. Cl.⁴: **G 06 F 13/14**

(21) Numéro de dépôt: **82402362.6**

(22) Date de dépôt: **22.12.82**

(54) Procédé d'échange de données entre des modules de traitement et une mémoire commune dans un système de traitement de données.

(30) Priorité: **30.12.81 FR 8124506**

(43) Date de publication de la demande:
**06.07.83 Bulletin 83/27**

(45) Mention de la délivrance du brevet:
**14.05.86 Bulletin 86/20**

(84) Etats contractants désignés:
**CH DE GB IT LI NL SE**

(56) Documents cités:
**GB - A - 2 074 764**
**US - A - 4 245 301**
**US - A - 4 290 102**

**IBM TECHNICAL DISCLOSURE BULLETIN, vol. 21, no. 9, février 1979, pages 3712-3715, New York, US, K.D. LEBDA et al.: "MULTIPLE CHANNEL PROTOCOL FOR MICROPROCESSORS"**
**IEEE TRANSACTIONS ON NUCLEAR SCIENCE, vol. NS-27, no. 1, février 1980, pages 612-621, New York, US, B. WADSWORTH: "A SYSTEM OVERVIEW OF FASTBUS"**
**Fall Joint Computer Conference, 1972, pp. 719-740 IMPLEMENTING FUNCTIONS: microprocessors and firmware seventh EUROMICRO symposium on**

(73) Titulaire: **Finger, Ulrich, 30, rue du Moulin de Pierre, F-92140 Clamart (FR)**
Titulaire: **Ligneres, Pierre, 80 bis, rue des Mûres, F-92160 Antony (FR)**

(72) Inventeur: **Finger, Ulrich, 30, rue du Moulin de Pierre, F-92140 Clamart (FR)**
Inventeur: **Ligneres, Pierre, 80 bis, rue des Mûres, F-92160 Antony (FR)**

(74) Mandataire: **Mongrédien, André et al, c/o BREVATOME 25, rue de Ponthieu, F-75008 Paris (FR)**

(56) Documents cités: (suite)
**microprocessing and microprogramming, Paris, septembre 8-10, 1981, pages 393-397, Amsterdam, NL., MOLLER-NIELSEN et al.: "A multi-processor for multi-program experiments"**

**Description**

La présente invention concerne un procédé d'échange de données entre des modules de traitement et au moins une mémoire commune dans un système de traitement de données.

L'invention s'applique à l'échange de données entre des modules de traitement et au moins une mémoire commune à tous ces modules, par l'intermédiaire d'un bus de liaison. Généralement, ces modules de traitement comprennent un processeur ou un microprocesseur associé à une mémoire locale.

Dans le domaine des processeurs et plus particulièrement des microprocesseurs, les techniciens arrivent à solutionner, souvent de manière complexe et coûteuse, les problèmes d'échanges de données et de signaux entre plusieurs processeurs connectés à un même bus permettant à ceux-ci d'accéder à une ressource commune telle qu'une mémoire par exemple. Ce problème présente bien entendu une importance accrue depuis l'apparition des microprocesseurs puisque, compte tenu de la puissance relativement importante de ceux-ci, de leur coût et de leur encombrement peu élevé, il devient de plus en plus intéressant de concevoir des systèmes multiprocesseurs dans lesquels les processeurs accèdent à des ressources communes, par l'intermédiaire d'un bus commun. Dans un système multiprocesseurs, les différents modules du système se trouvent physiquement sur différents circuits imprimés. Le ou les bus d'interconnexion entre ces modules ont une très grande influence sur les performances du système. On sait également que les bus connus ne permettent pas, de façon relativement aisée, d'interconnecter des modules présentant des caractères de non-compatibilité de fonctionnement. Il en résulte que tout concepteur d'un système multiprocesseurs doit rechercher constamment un compromis entre la compatibilité des modules qu'il doit interconnecter par l'intermédiaire d'un bus, et la performance du système, à la suite de cette interconnexion.

Le problème de compatibilité de fonctionnement entre des modules de traitement provenant de différents constructeurs n'ont pas joué un grand rôle dans la conception des ordinateurs de la dernière génération puisque, en général, personne ne cherchait à interconnecter entre eux des ordinateurs provenant de différents constructeurs. Au contraire, chaque constructeur n'avait aucun intérêt à rendre son ordinateur compatible avec ceux de ses concurrents, puisque dans les systèmes multiprocesseurs, c'était le même constructeur qui fournissait tous les modules à interconnecter.

L'arrivée des mini-ordinateurs, micro-ordinaturs et microprocesseurs permet de développer les systèmes multiprocesseurs mais, généralement comme dans le passé, l'interconnexion de plusieurs processeurs ne peut être réalisée que par l'intermédiaire d'un bus propre à chaque système multiprocesseurs. C'est ainsi que les concepteurs de systèmes multiprocesseurs développent respectivement leur propre bus d'échange entre modules de traitement et mémoire commune. L'arrivé récente des microprocesseurs à 16 éléments binaires et même à 32 éléments binaires rend les anciens bus d'échange incompatibles avec les spécifications de ces nouveaux microprocesseurs et tous les bus conçus antérieurement ne peuvent plus être utilisés. Parfois, des bus conçus pour d'anciens système multiprocesseurs sont devenus des bus standard et, pour les nouveaux système utilisant des microprocesseurs, il est nécessaire d'ajouter des fonctions à ces bus standard pour les rendre compatibles avec la nouvelle génération de microprocesseur; cet ajoût est coûteux et rend les bus obtenus peu performants.

Enfin, la plupart des bus d'échange de données dans des systèmes multiprocesseurs nécessitent des procédures d'échange très compliquées et leur structure les rend très onéreux. Généralement, ces bus présentent des paramètres de fonctionnement très difficiles à respecter ainsi qu'une très mauvaise adaptation entre le nombre de lignes d'échange de données dans chaque bus, le nombre d'adresses et le volume des données à transmettre. Ces bus ne peuvent pas être réalisés sous forme intégrée.

L'invention a pour but de remédier à ces inconvénients, elle concerne un procédé d'échange de données entre des modules de traitement et une mémoire commune, dans un système de traitement de données, ainsi qu'un dispositif permettant la mise en œuvre de ce procédé; grâce au procédé de l'invention, il est possible d'interconnecter entre eux des processeurs ou des microproceseurs de types différents, en rendant le dialogue de ces divers microprocesseurs sur le bus, indépendant des signaux de fonctionnement requis par le constructeur du microprocesseur. Le dispositif d'échange de données conforme à l'invention, permet, comme on le verra plus loin en détail, non seulement les échanges de données entre des processeurs ou microprocesseurs différents, mais également des échanges de signaux d'arbitrage de requêtes d'accès des processeurs au bus, d'interruption du système multiprocesseur, de synchronisation entre les différents processeurs, etc.

L'invention vise tout d'abord un procédé d'échange de données entre des modules de traitement et au moins une mémoire commune, dans un système de traitement de données, consistant à multiplexer, sur un bus commun de liaison entre ces modules et la mémoire commune, au moins un ensemble d'adresses (BA0 à BA31) et au moins un ensemble de données correspondant à ces adresses, de sorte que l'ensemble de données soit transmis après l'ensemble d'adresses, à multiplexer aussi d'une part des demandes d'arbitrage de requêtes d'accès au bus provenant d'ensembles d'arbitrage qui correspondent respectivement aux modules de traitement et qui sont reliés au bus et, d'autre part les ensembles d'adresses et de données, à transmettre sur le bus, des signaux de contrôle des modules du système, ces signaux de contrôle comprenant des signaux d'indication de remise sous tension après interruption de l'alimentation électrique des modules, d'indication d'arrêt d'un ou plusieurs modules, d'indication d'alarme due à un défaut de fonctionnement d'un ou plusieurs modules, d'interruption de tous les modules pour des tests, les différents modules étant synchronisés par des signaux d'interruption transmis sur le bus, les signaux d'interruption comprenant un signal d'interruption globale du système, ce signal étant fourni par un module et transmis à tous les autres pour être mémorisé dans un récepteur de chacun de ces modules et un signal d'interruption globale en fin de tâche effectuée par le système, ce signal étant mémorisé dans un émetteur de l'un des modules, et en ce que les signaux d'interruption comprennent en outre un signal fourni par un module pour masquer des signaux d'interruption fournis par les autres modules, un signal de remise à zéro de bascules locales dans chaque module pour indiquer que la mémoire commune n'est pas disponible.

Selon une autre caractéristique, le procédé consiste en outre à transmettre sur le bus, un signal ($\overline{BCLM}$) de commutation de la mémoire commune sur une mémoire dupliquée de celle-ci, un signal ($\overline{BVC}$) de validation des signaux ($\overline{BCS}$ et $\overline{BRZT}$) d'indication de coupure et de remise sous tension après interruption de l'alimentation électrique des modules.

Il est reconnu que des procédés d'échange de données entre des modules de traitement et au moins une mémoire commune sont décrits dans les documents:

– «Fall Joint Computer Conference, 1972, pages 719 à 740» et
– «Implementing functions: microprocessors and firmware, septembre 8–10, 1981, pages 393 à 397».

Selon le document «IBM Technical Disclosure Bulletin, volume 21, numéro 9, février 1979, pages 3712 à 3715», un ensemble d'adresses et au moins un ensemble de données correspondant à ces adresses, sont multiplexés sur un bus commun de sorte que l'ensemble de données soit transmis après l'ensemble d'adresses. Le transfert est essentiellement contrôlé par le module émetteur. Le module acceptant un transfert de donnée sur les bus fournit un signal d'acceptation de façon asynchrone. Les adresses sont aussi envoyées comme demande d'arbitrage de requête d'accès au bus. Des signaux de contrôle sont transférés sur le bus.

Les caractéristiques et avantages de l'invention sont exposés ci-après plus en détail à l'aide des dessins annexés dans lesquels:

– La figure 1 représente schématiquement un système multiprocesseur dans lequel intervient un dispositif d'échange de données, conforme à l'invention,

– la figure 2 représente certains des signaux circulant sur le bus, au cours d'un échange de données, pour une opération de lecture dans la mémoire commune,
– la figure 3 représente certains des signaux circulant sur le bus, au cours d'un échange de données, pour une opération d'écriture dans la mémoire commune,
– la figure 4 représente certains des signaux circulant sur le bus, au cours d'un échange de données, pour une opération de lecture et de modification d'écriture dans la mémoire commune.

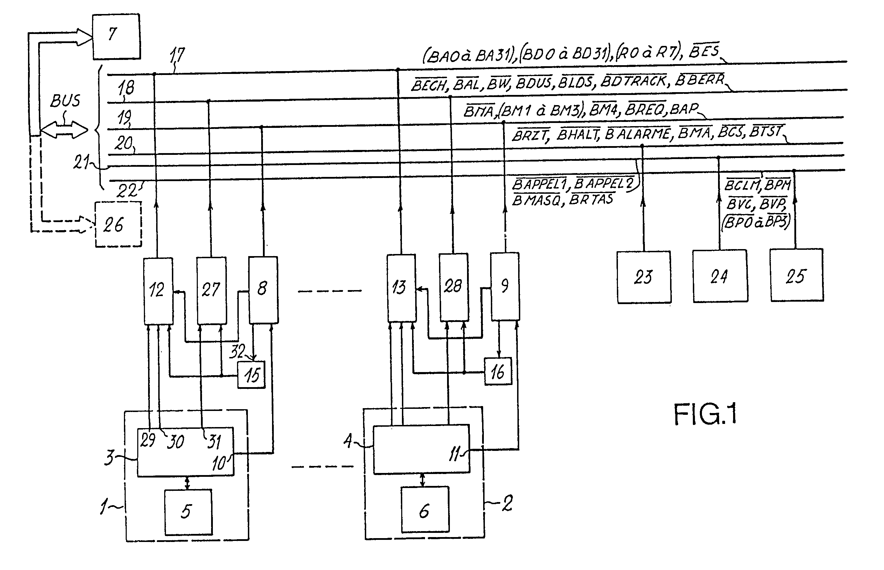

La figure 1 représente schématiquement un système multiprocesseurs dans lequel intervient un dispositif d'échange de données, conforme à l'invention. Ce système multiprocesseurs comprend des modules de traitement 1, 2 dont le nombre a été limité à deux sur la figure, pour en faciliter la représentation. Ces modules de traitement comprennent respectivement des microprocesseurs ou des processeurs 3, 4, associés respectivement à des mémoires locales 5, 6.

Le procédé de l'invention permet un échange de données entre d'une part, les différents modules de traitement et, d'autre part, entre ces modules et une mémoire commune 7. Ce dispositif comprend aussi un bus commun à tous ces modules et à cette mémoire, et, pour chaque module, un ensemble d'arbitrage des requêtes d'accès au bus, émises par chaque module. Ces ensembles d'arbitrage sont représentés en 8, 9 sur la figure. Les requêtes d'accès sont formulées sur des sorties 10, 11, des microprocesseurs 3, 4. Elles sont transmises aux ensembles d'arbitrage 8, 9 qui permettent d'arbitrer les requêtes provenant de chaque module. Ces ensembles d'arbitrage ne sont pas décrits ici en détail, puisqu'ils sont décrits plus précisément dans FR-A-2 513 407 (publié 25. 3. 1983). Le dispositif comprend aussi, pour chaque module, des moyens de multiplexage qui sont représentés en 12, 13. Ces moyens de multiplexage sont reliés aux modules correspondants ainsi qu'à la première ligne d'adresses 17 du bus. Ils permettent de multiplexer les adresses (BA0 à BA31) et les données (BD0 à BD31) à écrire ou à lire en mémoire commune 7. Le nombre de ces adresses correspond bien entendu aux caractéristiques des microprocesseurs utilisés qui, dans l'exemple représenté sur la figure, sont supposés être des microprocesseurs à 32 éléments binaires. Il est bien évident que ce nombre pourrait être différent. Le dispositif comprend aussi, pour chacun des modules, un générateur de base de temps relié à l'ensemble d'arbitrage et au multiplexeur correspondant.

Sur la figure, les générateurs de base de temps sont représentés en 15, 16. Le générateur de base de temps et les moyens de multiplexage sont constitués de manière que, comme on le verra plus loin en détail, un ensemble de données (BD0 à BD31) soit transmis sur le bus après un ensemble correspondant d'adresses (BA0 à BA31), de manière synchrone. Les ensembles d'arbitrage 8, 9 sont reliés à la troisième ligne 19 du bus. Le générateur de base de temps ainsi que les moyens de multiplexage sont en outre constitués pour multiplexer sur le bus, sur la première ligne de celui-ci, d'une part des demandes d'arbitrage de requêtes d'accès (R0 à R7) au bus provenant des différents ensembles d'arbitrage et, d'autre part, chaque ensemble de données (BD0 à BD31). Les demandes d'arbitrage sont transmises sur le bus, après chaque ensemble de données, de manière synchrone. Les requêtes d'accès (R0 à R7) sont transmises sur la première ligne 17 du bus, qui transmet aussi les adresses et les données. On a supposé dans cet exemple que le système multiprocesseurs comporte sept microprocesseurs interconnectés sur le bus bien que seulement deux de ceux-ci soient représentés sur la figure. Il en résulte que sept requêtes d'accès au bus sont à arbitrer. Les signaux $\overline{BES}$ qui circulent aussi dans la première ligne 17 du bus n'entrent pas dans le déroulement du procédé conforme à l'invention. Ces signaux sont déjà utilisés dans les bus connus et ils permettent de commander des opérations d'entrée-sortie.

Le dispositif comprend aussi des moyens de contrôle 23 du système, qui sont reliés à la quatrième ligne 20 du bus. Ces moyens de contrôle sont communs à tous les modules et ils fournissent des signaux indiqués sur la figure, qui seront décrits plus loin en détail. Ces signaux permettent en fait d'effectuer certaines opérations de contrôle des modules.

Le dispositif comprend aussi des moyens de synchronisation 24 qui sont reliés à la cinquième ligne du bus pour synchroniser, comme on le verra plus loin en détail, les différents modules par transmission de signaux d'interruption et de masquage sur le bus. Enfin, le dispositif comprend des moyens de protection 25 qui sont reliés au bus pour transmettre un signal BCLM de commutation de la mémoire commune 7, avec une mémoire dupliquée 26, ces moyens permettent aussi de transmettre un signal BVC (de validation des signaux BCS et BRZT) indiquant une interruption de l'alimentation électrique ou une remise sous tension des modules. Enfin, ces moyens de protection fournissent aussi un signal BVP qui permet de valider des données circulant sur le bus et qui sont accompagnées d'informations de parité.

D'autres signaux circulent dans les lignes du bus qui viennent d'être décrites. Ces signaux sont déjà utilisés dans des bus connus dans l'état de la technique et ils seront décrits plus loin en détail.

On a également représenté sur cette figure des moyens 27, 28 de contrôle du bus, reliés respectivement à chacun des modules et à la deuxième ligne 18 du bus. Ces moyens sont connus dans l'état de la technique et ils permettent de fournir des signaux de contrôle du bus qui seront décrits plus loins en détail.

Dans le dispositif représenté sur la figure, on suppose que les sorties 29, 30, 31 du microprocesseur fournissent respectivement des informations d'adressage, des données et des informations de lecture/écriture. On suppose d'autre part que l'entrée 32 de chaque générateur de base de temps 15 reçoit de l'ensemble d'arbitrage 8 correspondant, des informations indiquant qu'une demande d'accès du processeur au bus est acceptée.

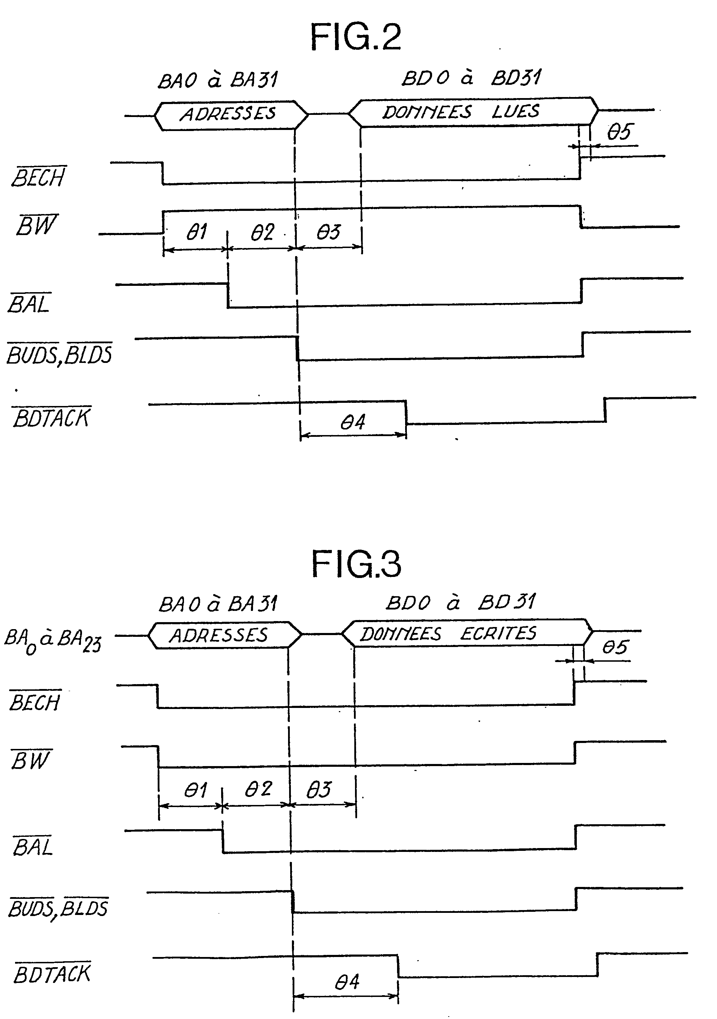

Les figures 2, 3 et 4 sont des chronogrammes des signaux qui interviennent dans un échange de données par l'intermédiaire du bus.

La figure 2 représente ces signaux dans le cas où l'échange de données concerne une opération de lecture de données dans la mémoire commune. On voit sur cette figure que les données (BD0 à BD31) sont transmises de manière synchrone après les adresses (BA0 à BA31) sur la première ligne 17 du bus. Les autres signaux qui interviennent sur cette figure sont des signaux transmis par la deuxième ligne 18 du bus et qui seront décrit plus loin en détail.

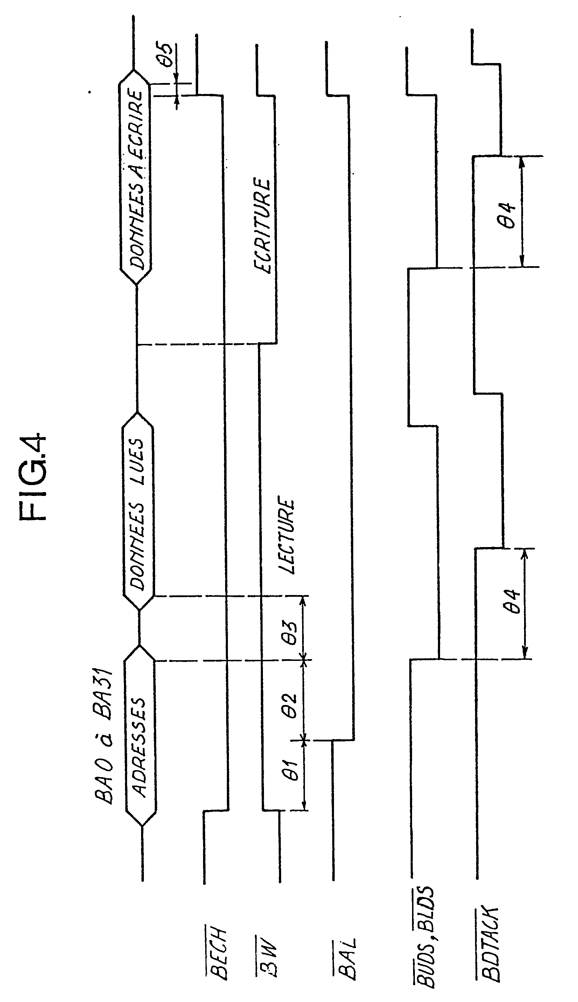

La figure 3 représente le chronogramme des signaux qui interviennent sur les bus dans le cas d'une opération d'écriture dans la mémoire commune. Comme sur la figure précédente, les autres signaux représentés sur cette figure sont des signaux qui circulent dans la deuxième ligne 8 du bus.

Enfin, la figure 4 représente un échange de données sur le bus, dans le cas d'une opération de lecture de données, suivie d'une opération d'écriture dans la mémoire commune. Comme sur les figures précédentes, les autres signaux représentés sur cette figure sont des signaux qui circulent dans la deuxième ligne 18 du bus. On voit ici aussi que les données lues ou écrites sont transmises après les adresses sur le bus, de manière synchrone. Sur cette figure, les références θ1, θ2, θ3, θ4, θ5 représentent des intervalles de temps dont les durées sont les suivantes:

– la durée θ1 qui est voisine de 60 ns correspond à un prépositionnement d'adresses par rapport au signal $\overline{BAL}$,
– la durée θ2 est, elle aussi, voisine de 60 ns et correspond au maintien de temps d'adressage par rapport au signal $\overline{BAL}$. Cette durée correspond aussi au retard entre les signaux $\overline{BUDS}$ et $\overline{BLDS}$.
– la durée θ3 est, elle aussi, voisine de 60 ns et elle correspond à l'intervalle de temps entre la transmission des adresses et la transmission des données de manière synchrone sur le bus,
– la durée θ4 est une durée réglable. Cette durée correspond au retard du signal $\overline{BDTACK}$ par rapport aux signaux $\overline{BUDS}$ et $\overline{BLDS}$.
– enfin, la durée θ5 correspond au temps de maintien maximal de la transmission des données, par rapport au basculement du signal $\overline{BECH}$.

Les signaux $\overline{BAL}$, $\overline{BUDS}$, $\overline{BLDS}$, $\overline{BDTACK}$, $\overline{BQDS}$ seront décrits plus loin.

On va maintenant décrire plus en détail les signaux qui apparaissent sur les différentes lignes du bus, en indiquant de manière plus précise ceux qui sont mis en œuvre dans le procédé de l'invention.

– Signaux sur la première ligne du bus (référence 17). (Adresses, données, requête d'accès, entrée-sortie).

(BD0 à BD31): données échangées sur le bus et transmises, selon l'invention, après les adresses, de manière synchrone.

(BA0 à BA31): adresses des données. Ces adresses doivent être mémorisées par BAL.

BES: signal d'entrée-sortie. Actif si non niveau logique = 0 – équivalent à une ligne d'adresses supplémentaire. Permet d'adresser 16M octets de mémoire et 16M octets d'entrée-sortie par exemple. Ce signal intervient dans les bus connus dans l'état de la technique. Durant la deuxième phase d'un échange, certaines lignes d'adresses et BES sont disponibles, et utilisés pour acheminer les demandes d'accès au bus des différents modules de traitement.

– Signaux sur la deuxième ligne du bus (référence 18). (Signaux de contrôle du bus).

BECH: Bus échange: actif si niveau = 0. Signal à trois états. Indique que les signaux sur les bus sont valides.

BAL: Bus adresse latch (verrouillage d'adresses sur le bus): actif si niveau = 0. Signal à trois états. Permet de mémoriser les adresses BA0 à BA31 et BES.

BW: Bus écriture: actif si niveau = 0. Signal à trois états. Indique le sens du transfert sur le bus. écriture si niveau = 0, lecture si niveau = 1.

BUDS: «Bus upper date strobe» (échantillonnage supérieur de données sur le bus): actif si niveau = 0 – signal à trois états. Valide l'échange pour les données de rangs supérieurs.

BLDS: «Bus low data strobe» (échantillonnage inférieure de données sur le bus): actif si niveau = 0 – signal à trois états. Valide l'échange pour les données de rangs inférieurs.

BDTACK: Acceptation du transfert de données de rangs inférieurs sur le bus: actif si niveau = 0. Signal à trois états. Delivré de manière asynchrone par le module qui se reconnaît dans un arbitrage et accepte le transfert.

BBERR: Bus erreur: actif si niveau = 0 – collecteur ouvert. Actif si un module ou une mémoire détecte une erreur non corrigée. Le cycle en cours doit être avorté. Tous ces signaux interviennent dans les bus connus dans l'état de la technique.

– Troisième ligne du bus (référence 19). (Signaux d'arbitrage).

BNA: Désignation d'un nouvel arbitre du bus. Collecteur ouvert, actif si niveau = 0.

BM1 à BM3: Désignation du numéro encodé du module maître du bus. Collecteur ouvert.

BM4: Validation de BM1 à BM3 – actif si niveau = 0. Collecteur ouvert.

Si BM4 = 0 les données BM1 à BM3 sont validées.

BREQ: Requête d'accès au bus – actif si niveau = 0. Collecteur ouvert. Demande d'accès au bus commun.

BAP: Bus arbitrage possible – actif si niveau = 1. Collecteur ouvert.

Tous ces signaux sont décrits dans la demande de brevet précitée.

– Quatrième ligne du bus (référence 20). (Signaux de contrôle du système).

BRZT: Retour d'alimentation électrique, ou mise sous tension, actif si niveau = 0. Durée supérieure à 100 ms.

BHALT: Bus halte: actif si niveau = 0. Collecteur ouvert. Indique qu'un ou plusieurs modules sont dans l'état d'arrêt.

BALARME: Bus alarme: actif si niveau = 0. Collecteur ouvert. Indique un état alarme sur un ou plusieurs modules.

BMA: Signal de marche-arrêt.

BCS: Coupure d'alimentation électrique – actif si niveau = 0. Collecteur ouvert.

BTST: Interruption de test – actif si niveau = 0. Collecteur ouvert. Interruption du système. Lance en test tous les modules.

Les signaux BUS HALT, BUS ALARME, BTST sont mis en œuvre dans le procédé de l'invention, les autres sont connus dans l'état de la technique.

– Cinquième ligne du bus (référence 21). (Signaux de synchronisation des modules et signaux d'interruptions).

BAPPEL 1: Interruption – actif si niveau = 0 – collecteur ouvert. Interruption globale. Appel d'un module de traitement vers les autres modules de traitement. Mémorisé au niveau des récepteurs de modules.

BAPPEL 2: Interruption. Actif si niveau = 0. Collecteur ouvert. Interruption globale en fin de travail, lancée par un module vers un autre module de traitement. Mémorisé au niveau de l'émetteur du module qui lance ce signal, dans une bascule locale de ce module, non représentée sur les figures.

BMASQ: Masquage global des signaux BAPPEL2 – actif si niveau = 0. Collecteur ouvert.

BRTAS: Remise à zéro des bascules locales. Actif si niveau = 0. Collecteur ouvert.

Tous ces signaux sont mis en œuvre dans le procédé de l'invention.

– Sixième ligne de bus (référence 21). (Signaux de protection: commutation de mémoire, validation de remise sous tension, ...).

BCLM: Commutation de la mémoire commune, sur une mémoire dupliquée.

BPM: Protection de mémoire.

Inhibe l'écriture dans le cas où la mémoire commune est protégée des coupures d'alimentation électrique.

BVC: Validation de commande. Confirme l'état des signaux BRZT et BCS.

BVP: Validation de la parité. Signal à trois états. Ce signal est actif si une parité accompagne les données.

BP0, BP1, BP2, BP3: Ces signaux indiquent les parités des informations d'adressage multiplexées avec les données.

Les signaux BCLM, BVC, BVP sont mis en œuvre dans le procédé de l'invention. Les autres signaux existent dans les bus connus dans l'état de la technique.

Le procédé qui vient d'être décrit permet bien d'atteindre les buts mentionnées plus haut: l'introduction des données sur le bus est effectuée de manière synchrone avec l'introduction des adresses, tandis que le fonctionnement global du système peut être asynchrone. L'arbitrage des reqêtes d'accès des différents modules au bus se fait directement sur les lignes d'adresses et pendant la phase d'échange des données. De plus, le procédé qui vient d'être décrit permet de gérer les interruptions directement à partir du bus, ce qui est impossible avec les dispositifs d'échange existents. En fait, dans les dispositifs existents, il existe des lignes d'interruption entre les différents modules; selon l'invention des lignes de gestions spécialisées permettent, grâce à des procédures de masquage, d'effectuer une gestion globale des interruptions. Comme indiqué plus haut, une ligne du bus permet, grâce au signal BRTAS, une libération des ressources sur tous les modules. Enfin, les lignes du bus qui interviennent dans le dispositif ne sont pas regroupées selon des critères de fonctionnalité mais elles sont réparties en fonction de leur sensibilité au bruit, ce qui permet d'obtenir des terminaisons de lignes beaucoup moins onéreuses. Le bus qui intervient dans le dispositif est un bus à haute disponibilité et présente des performances élevées.

## Revendications

1. Procédé d'échange de données entre des modules de traitement et au moins une mémoire commune, dans un système de traitement de données, consistant à multiplexer, sur un bus commun de liaison entre ces modules et la mémoire commune, au moins un ensemble d'adresses (BA0 à BA31) et au moins un ensemble de données (BD0 à BD31) correspondant à ces adresses, de sorte que l'ensemble de données soit transmis après l'ensemble d'adresses, à multiplexer aussi d'une part des demandes d'arbitrage de requêtes d'accès au bus (R0 à R7) provenant d'ensemble d'arbitrage qui correspondent respectivement aux modules de traitement et qui sont reliés au bus et, d'autre part les ensembles d'adresses (BA0 à BA31) et de données (BD0 à BD31), à transmettre sur le bus, des signaux de contrôle (BRZT, BUS HALT, BUS ALARME, BTST) des modules du système, ces signaux de contrôle comprenant des signaux (BRZT) d'indication de remise sous tension après interruption de l'alimentation électrique des modules, (B HALT) d'indication d'arrêt d'un ou plusieurs modules, (B ALARME) d'indication d'alarme due à un défaut de fonctionnement d'un ou plusieurs modules, BTST d'interruption de tous les modules pour des tests, les différents modules étant synchronisés par des signaux d'interruption transmis sur le bus, les signaux d'interruption comprenant un signal (B APPEL1) d'interruption globale du système, ce signal étant fourni par un module et transmis à tous les autres pour être mémorisé dans un récepteur de chacun de ces modules et un signal (B APPEL2) d'interruption globale en fin de tâche effectuée par le système, ce signal étant mémorisé dans un émetteur de l'un des modules, et en ce que les signaux d'interruption comprennent en outre un signal (BMASQ) fourni par un module pour masquer les signaux d'interruption fournis par les autres modules, un signal (BRTAS) de remise à zéro de bascules locales dans chaque module pour indiquer que la mémoire commune n'est pas disponible.

2. Procédé selon la revendication 1, caractérisé en ce qu'il consiste en outre à transmettre sur le bus, un signal (BCLM) de commutation de la mémoire commune sur une mémoire dupliquée de celle-ci, un signal (BVC) de validation des signaux (BCS et BRZT) d'indication de coupure et de remise sous tension après interruption de l'alimentation électrique des modules.

## Patentansprüche

1. Verfahren für das Austauschen von Daten zwischen Verarbeitungsmodulen und wenigstens einem gemeinsamen Speicher in einem Datenverarbeitungssystem, bei dem auf einem gemeinsamen Datenübertragungsverbindungsweg zwischen diesen Modulen und dem gemeinsamen Speicher wenigstens ein Adressensatz (BA0 bis BA31) und wenigstens ein Datensatz (BD0 bis BD31), der diesen Adressen entspricht, derart gemultiplext wird, dass der Datensatz nach dem Adressensatz übertragen wird, und auch einerseits Entscheidungsnachfragen für die Zugriffsanforderung (R0 bis R7) an den Übertragungsweg, die von den Entscheidungseinheiten herkommen, die jeweils den Verarbeitungsmodulen entsprechen und mit dem Übertragungsweg verbunden sind, und andererseits die Adressensätze (BA0 bis BA31) und die Datensätze (BB0 bis BB31) gemultiplext werden, bei dem auf dem Übertragungsweg Befehlssignale (BRZT, BUS HALT, BUS ALARME, BTST) der Systemmodule übertragen werden, wobei diese Befehlssignale Anzeigesignale (BRZT) für das Wieder-an-Spannung-legen nach einer Unterbrechung der elektrischen Versorgung der Module, Anzeigesignale (B HALT) für den Ausfall von einem oder mehreren Modulen, Anzeigesignale (B ALARME) für die Warnung aufgrund eines Funktionsfehlers eines oder mehrerer Module und Unterbrechungssignale (BTST) für alle Module bei Überprüfungen umfassen, wobei die verschiedenen Module durch die auf dem Übertragungsweg übertragenen Unterbrechungssignale synchronisiert sind, die Unterbrechungssignale ein Gesamtunterbrechungssignal (B APPEL1) für das System umfassen, dieses Signal von einem Modul bereitgestellt und an alle anderen übertragen wird, um in einem Empfänger bei jedem dieser Module gespeichert zu werden, sowie ein Gesamtunterbrechungssignal (B APPEL2) am Ende der von dem System durchgeführten Aufgabe, wobei dieses Signal in einem Sender von einem der Module gespeichert wird, und dass die Unterbrechungssignale ferner ein Signal (BMASQ) umfassen, das von einem Modul geliefert wird, um die von den anderen Modulen gelieferten Unterbrechungssignale zu maskieren, sowie ein Signal ($\overline{\text{BRTAS}}$) zum Zurücksetzen auf Null der örtlichen Kippschaltungen in jedem Modul, um anzuzeigen, dass der gemeinsame Speicher nicht verfügbar ist.

2. Verfahren nach Anspruch 1, dadurch gekennzeichnet, dass es ferner darin besteht, auf dem Übertragungsweg ein Umschaltsignal (BCLM) von dem gemeinsamen Speicher auf einen von diesem duplizierten Speicher und ein Gültigkeitssignal ($\overline{\text{BVC}}$) für die Anzeigesignale (BCS und BRZT) für die Unterbrechung und das Wieder-unter-Spannung-setzen nach Unterbrechung der elektrischen Versorgung der Module zu übertragen.

## Claims

1. Method for the exchange of data between processing modules and at least one common memory, in a data-processing system consisting in multiplexing, on a bus connecting the modules and the common memory, at least one assembly of addresses (BA0 to BA31) and at least one assembly of data (BD0 to BD31) corresponding to said addresses, such that the assembly of data is transmitted after the assembly of addresses, in also multiplexing on the one hand of arbitration requests for access requirements to the bus (R0 to R7) provided by arbitration assemblies which respectively correspond to the processing modules and which are connected to the bus, and, on the other hand, of assemblies of addresses (BA0 to BA31) and of data (BD0 to BD31), in transmitting on the bus control signals ($\overline{\text{BRZT}}$, $\overline{\text{BUS}}$ $\overline{\text{HALT}}$, $\overline{\text{BUS ALARME}}$, BTST) of the system modules, said control signals comprising signals ($\overline{\text{BRZT}}$) indicating restoration of current after interruption of electric supply to the modules, ($\overline{\text{B}}$ $\overline{\text{HALT}}$) indicating stopping of one or more modules, ($\overline{\text{B ALARME}}$) indicating alarm due to a defect in operation of one or more modules, (BTST) of interruption of all modules for tests, the different modules being synchronised by interruption signals transmitted on the bus, the interruption signals comprising a signal (B APPEL1) of complete interruption of the system, said signal being provided by one module and transmitted to all the others and memorised in a receiver of each of the modules, and a signal (B APPEL2) of complete interruption and the end of the task effected by the system, said signal being memorised in a transmitter of one module, and the interruption signals additionally comprising a signal ($\overline{\text{BMASQ}}$) provided by one module to mask the interruption signals provided by the other modules, a signal ($\overline{\text{BRTAS}}$) for restoring to zero the local multivibrators in each module to indicate that the common memory ist not available.

2. Method according to Claim 1, characterised in that it additionally consists in transmitting on the bus, a signal ($\overline{\text{BCLM}}$) of switching of the common memory to a duplicate memory, a signal ($\overline{\text{BVC}}$) for validation of signals ($\overline{\text{BCS}}$ and $\overline{\text{BRZT}}$) indicating interruption and restoration of current, after interruption of electric supply to the modules.

FIG.1

0 083 283

# FIG.2

BA0 à BA31 — ADRESSES
BD0 à BD31 — DONNEES LUES

$\overline{BECH}$

$\overline{BW}$ — $\theta 1$ $\theta 2$ $\theta 3$

$\overline{BAL}$

$\overline{BUDS}, \overline{BLDS}$

$\overline{BDTACK}$ — $\theta 4$

$\theta 5$

# FIG.3

$BA_0$ à $BA_{23}$ — BA0 à BA31 — ADRESSES
BD0 à BD31 — DONNEES ECRITES

$\overline{BECH}$

$\overline{BW}$ — $\theta 1$ $\theta 2$ $\theta 3$

$\overline{BAL}$

$\overline{BUDS}, \overline{BLDS}$

$\overline{BDTACK}$ — $\theta 4$

$\theta 5$

11

# FIG.4

BA0 à BA31

ADRESSES

DONNEES LUES

DONNEES A ECRIRE

θ5

$\overline{BECH}$

$\overline{BW}$

ECRITURE

θ1  θ2  θ3  LECTURE

$\overline{BAL}$

$\overline{BUDS},\overline{BLDS}$

$\overline{BDTACK}$

θ4

θ4

0 083 283